# EUROPEAN PATENT APPLICATION

(11) **EP 4 450 863 A1**
(43) Date of publication of application: **23.10.2024**
(21) Application number: 24170182.0
(22) Date of filing: 15.04.2024
(51) Int. Cl.: F17C 5/02

(54) **APPARATUS AND METHOD FOR DISPENSING A CRYOGENIC FLUID**

(30) Priority: 20.04.2023 US 202318137048
(71) Applicant: Air Products and Chemicals, Inc., Allentown, PA 18106-5500 (US)
(72) Inventor: SANE, Anup Vasant, Allentown, 18104 (US); COHEN, Joseph P., Bethlehem, 18017 (US); WAGNER, Robert Kevin, Whitehall, 18052 (US); HOFFMAN, Steven W., Lafayette, 94549 (US); JOSHI, Prasad Prabhakar, Macungie, 18062 (US); CHALK, David Jonathan, Slatington, 18080 (US); VAN DEN AKKER, Arie, 3155 TE Maasland (NL)
(74) Representative: SSM Sandmair

(57) **Abstract**

An apparatus and process for dispensing a cryogenic fluid can include an apparatus and process configured for dispensing the cryogenic fluid into a fuel tank. Embodiments can be configured for dispensing of liquid hydrogen into fuel tanks of vehicles, for example. Embodiments can be provided so no pump usage is necessary for filing the fuel tank or substantially filling the fuel tank (e.g., filling the fuel tank to a level of 90% filled or a level of 95% filled, etc.) during the dispensing. This can permit embodiments to avoid cryogenic boil off and fugitive emission losses as well as reducing power consumption, reducing maintenance costs, and permitting dispensing start-up to occur more quickly.

## Description

### TECHNICAL FIELD

The innovation relates to apparatuses and methods for dispensing a cryogenic fluid (e.g., liquid hydrogen, liquid methane, etc.).

### BACKGROUND

Examples of hydrogen generation and supply systems can be appreciated from U.S. Patent Nos. 6,401,767, 6,474,078, 6,619,336, 6,708,573, 6,745,801, 6,786,245, 7,028,724, 7,328,726, 7,793,675, 7,921,883, 8,020,589, 8,286,675, 8,365,777, 8,453,682, 8,899,278, 9,074,730, 9,151,448, 9,261,238, 9,279,541, 9,404,620, 9,863,583, 10,502,649, and 10,508,770.

Cryogenic fluid dispensing systems typically utilize a pump to feed the fluid toward a device for use of that fluid by that device. Examples of pumps used to help facilitate cryogenic fluid dispensing can be appreciated from U.S. Patent No. 6,474,078 and U.S. Patent Application Publication No. 2014/0096540.

### BRIEF SUMMARY OF THE INVENTION

We determined that a new process for cryogenic fluid dispensing and new apparatus for cryogenic fluid dispensing are needed to help minimize loss of a cryogenic fluid (e.g. hydrogen) while also reducing the amount of time that is needed to initiate dispensing and reducing boil off loss and other cryogenic fluid losses that may occur from conventional dispensing that may use a pump, or other mechanical prime mover(s) for the entirety of a fuel tank filling process. Some embodiments can permit startup times to be significantly reduced so that there may be no delay in permitting dispensing operations for feeding a cryogenic liquid into a vehicle fuel tank or a very minimal delay (e.g., less than 5 seconds, less than 10 seconds, less than 30 seconds, less than 60 seconds etc.).

Embodiments can also help significantly reduce losses associated with friction as well as other mechanical and thermodynamic losses that can occur via substantial use of a pump to drive the flow of the cryogenic fluid. For example, some embodiments can be provided so that a pump is not needed for the dispensing of the cryogenic fluid to the fuel tank for filling of the fuel tank or to fill the fuel tank to a substantially filled level. A substantially filled level of the vehicle fuel tank, can be, for example, a level that is at least 90% filled and less than 100% filled, greater than or equal to 95% filled while also being less than 100% filled, greater than or equal to 97% filled and less than 100% filled, or other suitable fill level that is a substantial filling of the vehicle fuel tank (e.g. a significant amount of fuel is provided to the fuel tank without use of a pump so that the fuel tank can be at least 80% filled to 100% filled, etc.). By avoiding use of a pump or substantial use of a pump, mechanical friction losses and other pump related losses (e.g., fugitive emission of vapor formed from the pumping of the cryogenic fluid, etc.) and inefficiencies can be avoided.

The vehicle having the fuel tank to be filled by an embodiment of our apparatus or by use of an embodiment of the process can be, for example, a truck, car, bus, boat, drone, rail, aircraft, construction and mining vehicles or other type of vehicle. Such vehicles can be industrial vehicles or large transportation vehicles (e.g., a bus, construction vehicle, a truck for transportation of goods or material, etc.), for example.

In a first aspect, an apparatus for cryogenic fluid dispensing includes a pressure adjustment mechanism connectable to a tank configured to store a cryogenic liquid within the tank. The tank to which the pressure adjustment mechanism is connectable can be positioned to feed the cryogenic liquid to at least one dispenser. The pressure adjustment mechanism can be configured to increase a pressure of the tank from a first pre-selected pressure to a second pre-selected pressure in response to a detection that the cryogenic liquid from the tank is to be fed to the at least one dispenser for filling a vehicle fuel tank so that the cryogenic fluid is outputtable from the tank to the vehicle fuel tank via the dispenser. The pressure adjustment mechanism can be configured to decrease the pressure of the tank from the second pre-selected pressure to the first pre-selected pressure in response to a detection that filling of the vehicle fuel tank is stopped or completed. The pressure adjustment mechanism can be configured such that the decrease of the pressure of the tank from the second pre-selected pressure to the first pre-selected pressure includes removing at least one cryogenic fluid from the tank to store the removed at least one cryogenic fluid as a compressed gas within a storage unit connectable to the tank. The removed at least one cryogenic fluid can include the cryogenic liquid removed from the tank and/or a cryogenic gas removed from the tank. The pressure adjustment mechanism can be configured such that the increase in pressure of the tank from the first pre-selected pressure to the second pre-selected pressure includes feeding the compressed gas stored in the storage unit to the tank.

In a second aspect, the cryogenic fluid can include hydrogen or natural gas. For example, the cryogenic fluid can include hydrogen and the cryogenic liquid can be comprised of liquid hydrogen and the cryogenic gas can be comprised of hydrogen gas. As another example, the cryogenic fluid can include methane and the cryogenic liquid can be comprised of liquid methane and the cryogenic gas can be comprised of methane gas.

In a third aspect, the apparatus can include other elements. For example, the apparatus can include the tank and/or the dispenser. In some implementations, the dispenser can be connectable to the vehicle fuel tank such that gas from the vehicle fuel tank is passable from the vehicle fuel tank to the storage unit during the filling of the vehicle fuel tank with the cryogenic liquid.

In a fourth aspect, the pressure adjustment mechanism can include an auxiliary pump connected between the tank and the storage unit and/or a compressor connected between the storage unit and the tank. In some implementations, the pressure adjustment mechanism can also comprise a vaporizer positioned between the tank and the compressor. In some embodiments, the vaporizer can also (or alternatively) be positioned between the auxiliary pump and the storage unit.

In a fifth aspect, the apparatus can include an auxiliary pump positioned between the tank and the dispenser. The auxiliary pump can be configured to drive a flow of the cryogenic liquid from the tank to the dispenser after the tank is at the second pre-selected pressure for filling the vehicle fuel tank from a substantially filled condition to an entirely filled condition. In some implementations, substantially filled condition of the vehicle fuel tank is less than 100% filled and at least 90% filled. In other implementations, the substantially filled condition of the vehicle fuel tank can be less than 100% filled at least 95% filled.

In a sixth aspect, the pressure adjustment mechanism can include (1) a vaporizer positioned to receive the cryogenic gas and/or the cryogenic liquid from the tank during the decrease of the pressure of the tank from the second pre-selected pressure to the first pre-selected pressure and output a heated gas and (2) a compressor positioned to receive the heated gas to compress the heated gas to form the compressed gas and feed the compressed gas to the storage unit.

In a seventh aspect, the pressure adjustment mechanism can include (1) a vaporizer positioned to receive the cryogenic gas and/or the cryogenic liquid from the tank during the decrease of the pressure of the tank from the second pre-selected pressure to the first pre-selected pressure and output a heated gas and (2) an auxiliary pump positioned to drive a flow of the cryogenic gas and/or a flow of the cryogenic liquid from the tank to the storage unit during the decrease of the pressure of the tank from the second pre-selected pressure to the first pre-selected pressure such that the cryogenic gas and/or the cryogenic liquid pass through the vaporizer to be output as the heated gas.

In an eighth aspect, the apparatus can include a controller having a processor connected to a non-transitory computer readable medium. The controller can be communicatively connectable to the pressure adjustment mechanism.

A ninth aspect can include the first aspect with one or more features of any of the second aspect, third aspect, fourth aspect, fifth aspect, sixth aspect, seventh aspect, or eighth aspect to form a suitable embodiment that can meet a particular design objective.

In a tenth aspect, a process for cryogenic fluid dispensing is provided. The process can include feeding compressed gas stored in a storage unit to a tank to increase pressure of the tank above a first pre-selected pressure for driving cryogenic liquid within the tank from the tank to the dispenser for passing the cryogenic liquid to a vehicle fuel tank of the vehicle in response to detection of a fueling of a vehicle to occur at a dispenser. The providing of fluid from the tank to the vehicle fuel tank can be stopped in response to determining that the vehicle fuel tank is at a pre-selected filled threshold. The process can also include removing fluid from the tank to reduce the pressure to the first pre-selected pressure.

In an eleventh aspect, the process can include actuating an auxiliary pump to facilitate driving the cryogenic liquid from the tank to the vehicle fuel tank to fill the vehicle fuel tank from a substantially filled condition to an entirely filled condition in response to determining that the pressure of the tank is at a pre-selected second pressure and that the vehicle fuel tank is not at the pre-selected filled threshold. In some implementations, the substantially filled condition of the vehicle fuel tank can be less than 100% filled and at least 90% filled.

In a twelfth aspect, the process can include determining that the pressure of the tank is at the pre-selected second pressure and that the vehicle fuel tank is not at the pre-selected filled threshold via a controller communicatively connected with the dispenser and at least one pressure sensor positioned to monitor pressure within the tank.

In a thirteenth aspect, the cryogenic liquid can be liquid hydrogen or can include liquid hydrogen. In alternative embodiments, the cryogenic liquid can be liquid methane or can include liquid methane.

In a fourteenth aspect, the process can include receiving gas from the vehicle fuel tank during fueling of the vehicle fuel tank and feeding the received gas to the storage unit.

In a fifteenth aspect, the removing of the fluid from the tank to reduce the pressure to the first pre-selected pressure can include at least one of: (i) removing cryogenic gas from the tank and feeding the removed cryogenic gas to the storage unit and (ii) removing the cryogenic liquid from the tank, heating the removed cryogenic liquid via a vaporizer to form a gas for feeding the gas to the storage unit.

In a sixteenth aspect, the removing of the fluid from the tank to reduce the pressure of the tank to the first pre-selected pressure includes actuating a compressor connected between the tank and the storage unit to drive a flow of gas out of the tank for being fed to the storage unit.

In a seventeenth aspect, the tenth aspect of the process can include one or more features from any of the other aspects discussed herein to meet a particular set of design criteria.

In some embodiments of the process and/or the apparatus, a determination or detection that cryogenic fluid from the tank is to be fed to one or more dispensers can be detected in any of a number of ways. For instance, use by a user of a nozzle at the dispenser to facilitate vehicle fueling, use of a user interface at a dispenser, detection of a demand for fluid via a sensor, or other detection mechanism can be utilized. Also, detection that filling of a vehicle fuel tank is complete can be provided in a number of ways. For example, a return of a nozzle to a holder at a dispenser, a cessation of a demand for fluid at the dispenser for a pre-selected time period detected via a sensor and/or controller, or other detection mechanism may be utilized.

It should be appreciated that embodiments of the apparatus can utilize embodiments of our process.

It should also be appreciated that embodiments of the process and apparatus can utilize various conduit arrangements and process control elements. For instance, embodiments may utilize sensors (e.g., pressure sensors, temperature sensors, flow rate sensors, etc.), controllers, valves, and other process control elements. Some embodiments can utilize an automated process control system and/or a distributed control system (DCS). Various different conduit arrangements and process control systems can therefore be utilized to meet a particular set of design criteria for a particular embodiment.

Other details, objects, and advantages of our apparatuses for cryogenic fluid dispensing, processes for cryogenic fluid dispensing, and methods of making and using the same will become apparent as the following description of certain exemplary embodiments thereof proceeds.

### BRIEF DESCRIPTION OF THE DRAWINGS

Exemplary embodiments of apparatuses for cryogenic fluid dispensing, processes for cryogenic fluid dispensing, and methods of making and using the same are shown in the drawings included herewith. It should be understood that like reference characters used in the drawings may identify like components.
Figure 1 is a schematic block diagram of a first exemplary embodiment of a cryogenic fluid dispensing apparatus 1. Embodiments of our process for cryogenic fluid dispensing can be utilized in this embodiment of the apparatus 1.
Figure 2 is a schematic block diagram of a first exemplary implementation of the first exemplary embodiment of the cryogenic fluid dispensing apparatus. Embodiments of our process for cryogenic fluid dispensing can be utilized in this implementation of our embodiment of the apparatus 1.
Figure 3 is a schematic block diagram of a second exemplary implementation of the first exemplary embodiment of the cryogenic fluid dispensing apparatus 1. Embodiments of our process for cryogenic fluid dispensing can be utilized in this implementation of our embodiment of the apparatus 1.
Figure 4 is a schematic block diagram of a third exemplary implementation of the first exemplary embodiment of the cryogenic fluid dispensing apparatus 1. Embodiments of our process for cryogenic fluid dispensing can be utilized in this implementation of our embodiment of the apparatus 1.
Figure 5 is a block diagram of an exemplary embodiment of our process for cryogenic fluid dispensing.

### DETAILED DESCRIPTION

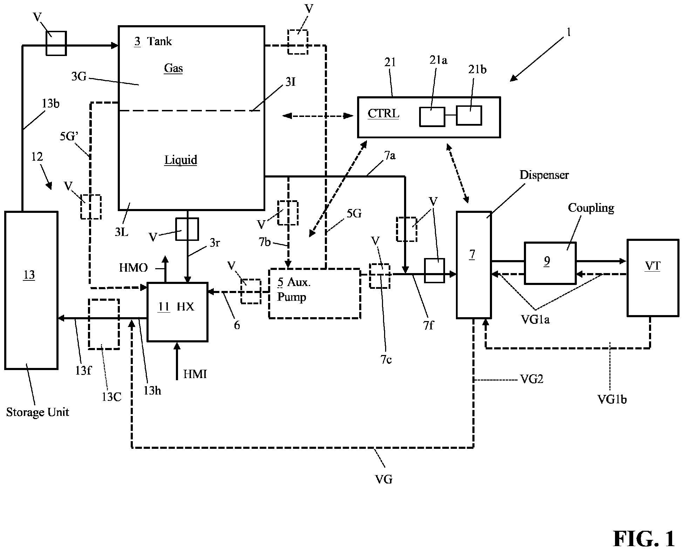

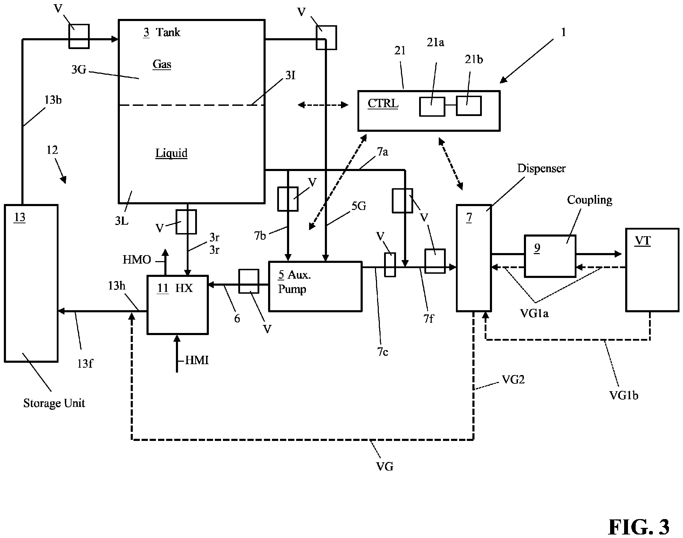

Referring to Figures 1-5, an apparatus 1 for dispensing a cryogenic fluid can include a tank 3 that is in fluid communication with a dispenser 7 for feeding a cryogenic fluid that includes liquid to the dispenser 7. The dispenser 7 can be positioned to receive the cryogenic fluid from the tank 3 for feeding to a vehicle fuel tank VT via a nozzle connected to the dispenser via a hose and a breakaway coupling 9 that is connected between the dispenser 7 and the nozzle. The breakaway coupling 9 can be a component of the dispenser or can be positioned external to the dispenser 7 to facilitate a connection between the dispenser 7 and fuel nozzle for fueling of a vehicle via the liquid 3L provided by the tank 3.

The breakaway coupling 9 can be a breakaway connector that can be provided to help improve the safety of fueling operations. In some configurations, it is contemplated that the breakaway coupling 9 may not be utilized and the nozzle can be connected to a hose of the dispenser through which the cryogenic fluid from the dispenser 7 is feedable into the fuel tank VT.

In some embodiments, the cryogenic fluid stored within the tank 3 can include a liquid 3L. The liquid 3L can be liquid hydrogen, for example. The tank 3 can also include a gas 3G that has vaporized from the cryogenic liquid 3L as it is stored in the tank 3 or otherwise has been fed to the tank 3. The gas 3G can be a hydrogen gas that is at a cryogenic temperature, for example.

The tank 3 can be a stationary horizontally elongated tank, a stationary vertically elongated tank, a mobile tank of a tanker trailer, or other type of vessel for storage of the cryogenic fluid within a chamber of the tank 3 (e.g. can be a horizontal tank or vertical tank, can be a tank of a particular shape, can be a cylindrical shaped tank, can be a polygonal shaped tank, can be a tank of a tanker trailer that may be moved via a truck, etc.). The gas 3G within the tank 3 can be above a top surface of the liquid 3L within the tank 3. The top surface of the liquid within the tank 3 can define a gas/liquid interface 3I within the tank. The gas 3G can be above the interface 3I and the liquid 3L can fill the tank from this interface 3I to a bottom of the chamber of the tank.

The tank 3 can be configured to maintain the fluid stored in the chamber of the tank 3 to a pre-selected storage temperature. This temperature can be a sub-cooled temperature for maintaining the fluid as a liquid to minimize boil off, or boil up, that may occur as the liquid 3L is stored in the tank 3. For example, when the liquid 3L is liquid hydrogen, the pre-selected storage temperature can be 30 Kelvin (K), which is -243.15°C, or can be in a range of 20K to 40K (e.g., in a range of between -253°C and -232°C).

The tank 3 can also be connected to an auxiliary pump (Aux. Pump) that is positioned between the tank 3, the dispenser 7, and a vaporizer 11. The vaporizer (HX) can be a heat exchanger, an electric heater, or other type of heater that can warm liquid 3L from the tank 3 to vaporize the liquid into a gas for storage in at least one storage vessel of a storage unit 13. The vaporizer 11 can also receive gas 3G from the tank to heat the gas 3G. For example, when the vaporizer 11 is configured as a heat exchanger, the vaporizer 11 can receive a heating medium feed HMI that provides heat to warm the liquid 3L and vaporize it before outputting the cold heating medium HMO from the vaporizer 11. The heating medium fed to the vaporizer 11 in such a configuration can be ambient air, compressed air, or other flow of fluid for heating liquid from the tank 3 for vaporizing that liquid for feeding to the storage unit 13 for storage therein.

The storage unit 13 can include one or more storage vessels that can store hydrogen gas, compressed hydrogen gas, or compressed hydrogen fluid. In some arrangements, the storage unit 13 can include at least one tube trailer or other trailer that can store a compressed hydrogen gas at a pre-selected storage pressure. Such a pre-selected storage pressure can be a pressure between 30 MPa and 75 MPa (e.g. 45 MPa, between 30 MPa and 50 MPa, etc.). In embodiments in which the storage unit 13 can include at least one tube trailer, the tube-trailer can be an external tube trailer that may be positioned to be exchanged with other mobile tube trailers to account for storage and capacity needs at a particular site.

The apparatus 1 can also include a controller (CTRL). The controller 21 can include a processor 21a that is connected to a non-transitory memory 21b. The processor can also be connected to at least one transceiver for communicative connections (shown in broken line double arrows) to various sensors, valves V, and other process control elements of the apparatus 1. The controller can be connected to pressure sensors, temperature sensors, valves, and other elements for controlling operations of the apparatus 1 for dispensing of fuel to vehicle fuel tanks via one or more dispensers 7, for example.

The apparatus 1 can be positioned and configured to include a tank pressure adjustment mechanism 12 that can be actuated to increase the pressure within the tank 3 from a first pre-selected pressure to a second pre-selected pressure. The first pre-selected pressure of the tank 3 can be a pre-selected storage pressure that is a desired pressure of the tank when the cryogenic liquid within the tank is not being fed to the dispenser 7 (which is used for feeding to at least one vehicle fuel tank VT during fueling operations). The second pre-selected pressure can be a desired pressure of the tank 3 to facilitate feeding of the cryogenic liquid within the tank 3 to the dispenser 7 for filling a vehicle fuel tank VT so the fuel tank VT can be entirely filled or is at least substantially fillable (e.g. can be filled to at least 80% of the fuel tank's capacity, can be filled to at least 90% of its capacity can be filled to at least 95% of the fuel tank's capacity, or can be filled to at least 97% of its capacity, etc.).

The first pre-selected pressure can be lower than the second pre-selected pressure. In some embodiments, the first pre-selected pressure can be between 0.8 MPa and 1.2 MPa less than the second pre-selected pressure (e.g., the first pre-selected pressure can be 1.0 MPa less than the second pre-selected pressure, etc.). Other embodiments may utilize other values or ranges for the first and second pre-selected pressures.

For example, in some embodiments in which the cryogenic liquid is liquid hydrogen, the first pre-selected pressure can be 0.4 MPa, or a pressure in the range of 0.1 MPa and 0.5 MPa and the second pre-selected pressure can be a pressure of 1.293 MPa or a pressure in a range of 0.8 MPa to less than or equal to 2 MPa. Of course, other embodiments may utilize other pressure values as well when the cryogenic liquid 3L is not liquid hydrogen.

In other embodiments where the cryogenic liquid can be liquid natural gas, or liquid methane, these pressures can have different values within different ranges. Preferably, the second pre-selected pressure for the tank 3 is selected so that the pressure within the tank 3 storing the cryogenic liquid 3L is below the critical pressure of the cryogenic liquid. Such a setting can help improve safe operation of the apparatus, for example. The first pre-selected pressure for the tank 3 can be selected to meet a pre-selected set of design criteria for storage of the cryogenic liquid for subsequent use in dispensing operations.

The tank pressure adjustment mechanism 12 can include the storage unit 13. The tank pressure adjustment mechanism 12 can also include other elements in different embodiments. For example, the tank pressure adjustment mechanism 12 can also include a compressor 13C, the vaporizer 11, and/or the auxiliary pump 5. The tank pressure adjustment mechanism 12 can be external to the tank 3 for increasing the pressure within the tank 3 for fuel dispensing so the pressure of the tank 3 increases from the first pre-selected pressure to the second pre-selected pressure and can also be positioned and configured to receive fluid from the tank 3 when the tank 3 is not in use for dispensing to reduce the pressure within the tank from the second pre-selected pressure to the first pre-selected pressure. The fluid received at the pressure adjustment mechanism 12 for pressure reduction can be fluid (e.g. gas, liquid, or both liquid and gas) that is to be removed from the tank 3 to be stored in the storage unit 13 after it was output from the tank 3 to reduce the pressure within the tank 3, for example. The tank pressure adjustment mechanism 12 can be configured to feed the stored fluid from the storage unit 13 to the tank 3 for increasing the pressure of the tank 3 for feeding cryogenic liquid to the dispenser 7 as well.

In some embodiments, it is contemplated that the tank pressure adjustment mechanism 12 can be integrated with the tank 3 such that it may not be separated from the tank 3. In such embodiments, the pressure of the tank 3 can be the pressure of the chamber of the tank 3 that retains the cryogenic liquid to be fed to the dispenser and the storage unit 13 can include one or more storage vessels for fluid that can be supported by a housing or base of the tank and is in fluid communication with the cryogenic liquid storing chamber. In such a configuration, the storage unit 13 can still be considered external to the tank 3 due to the separation of storage of the fluid within the storage unit 13 from the storage of fluid within the chamber of the tank 3 having the cryogenic liquid 3L stored therein.

The pressure adjustment mechanism 12 can be positioned and configured to facilitate feeding of the liquid 3L within the tank 3 to the dispenser 7 for feeding to one or more vehicle fuel tanks VT. For example, in a non-use state, the storage tank 3 can be at a first pre-selected pressure within a pre-selected cryogenic fluid storage pressure range. In response to a user interacting with the dispenser 7 for feeding fuel to a vehicle fuel tank VT (e.g. positioning a nozzle of the dispenser 7 connected to the dispenser 7 via a coupling 9 adjacent to or in an inlet for a vehicle fuel tank for feeding fuel to a fuel tank VT, interacting with the dispenser 7 to activate the dispenser 7 for fueling operation, etc.), the tank pressure adjustment mechanism 12 can be actuated to feed fluid from the storage unit 13 into the tank 3 via a storage unit output conduit 13b positioned between the tank 3 and the storage unit 13 for feeding compressed fluid stored in at least one vessel of the storage unit 13 to the tank 3 to increase the pressure within the tank 3 from above the first pre-selected pressure. The pressure within the tank 3 can be increased by such feeding of fluid from the storage unit 13 until the pressure is determined to be at the second pre-selected pressure. The fluid fed to the tank 3 via the storage unit 13 can be compressed gas or a compressed fluid that is a combination of compressed gas and liquid. The compressed fluid can be compressed hydrogen gas or a mixture of compressed hydrogen gas and hydrogen liquid, for example.

The feeding of the compressed fluid from the storage unit 13 can be facilitated by adjustment of at least one valve V of the storage unit output conduit 13b from a closed position to an open position. Actuation of one or more of the valves V between their open and closed positions to provide a desired flow of fluid into the tank 3 or out of the tank 3 can be facilitated by the controller 21 in response to use and/or non-use of the dispenser 7 by a user, for example.

The pressure of the compressed fluid stored in the storage vessel(s) of the storage unit 13 can be at a pre-selected storage pressure that is above the first pre-selected pressure of the tank 3 and can be selected to be suitable for feeding fluid from the storage vessel(s) of the storage unit 13 into the tank 3 for increasing the pressure in tank 3 to the second pre-selected pressure. In some embodiments, this pre-selected storage pressure for the storage unit 13 can be 1.4 MPa or a value that is greater than 1.4 MPa, for embodiments where the cryogenic liquid 3L within the tank 3 is liquid hydrogen and the cryogenic fluid stored in the storage vessel 3 is hydrogen gas or a mixture of hydrogen gas and hydrogen liquid. In some embodiments, for example, the pre-selected storage pressure for the storage unit 13 can be 35 MPa, 50 MPa, or a pressure that is between 10 MPa and 75 MPa for facilitating the feeding of fluid from the storage unit 13 to the tank 3 to increase the pressure in the tank 3 to the second pre-selected pressure.

In response to the pressure of the tank 3 being increased above the first pre-selected pressure of the tank 3 using the compressed fluid in storage unit 13, liquid 3L from the tank 3 can be output from the tank 3 via a tank fuel feed conduit 7a that is connected to a dispenser feed conduit 7f for feeding the cryogenic liquid 3L to the dispenser 7 for feeding to the vehicle fuel tank VT. The tank fuel feed conduit 7a can be positioned between the dispenser feed conduit 7f and the tank 3 or can be a portion of the dispenser feed conduit 7f that is closest to the tank 3 for receiving the liquid 3L output from the tank 3 for feeding to the dispenser 7. At least one valve V can be adjusted between a closed position and an open position within the conduits fluidly connecting the tank 3 to the dispenser 7 to facilitate the flow of liquid 3L from the tank 3 to the dispenser 7.

After the vehicle fuel tank VT is sufficiently filled, the fueling can be stopped. After fueling is stopped at the dispenser (e.g. the nozzle of the dispenser 7 is returned to a stowed position at the dispenser 7, the user provides input to the dispenser 7 indicating fueling is complete, etc.), one or more valves V of at least the storage unit output conduit 13b can be adjusted back to a closed position to stop the feeding of fluid to the tank 3 for increasing of pressure within the tank 3. Such closing of one or more valves V of the storage unit output conduit 13b can also, or alternatively, occur once the pressure of the tank 3 is determined to be at the pre-selected second pressure and before fueling is completed. Such a determination of the tank pressure can be provided via the controller 21 being in communicative connection with at least one pressure sensor of the tank 3 or by the pressure sensor of the tank 3 being in communicative connection with a distributed control system for adjustment of the valves V, for example.

After fueling is stopped, the pressure of the tank 3 can be reduced back to the first pre-selected pressure. Such a pressure reduction can be facilitated by the pressure adjustment mechanism 12. For example, at least one fluid output conduit connected between the tank 3 and the storage unit 13 can be utilized to facilitate a flow of fluid out of the tank 3 to the storage unit 13 for reduction of the pressure within the tank back to the first pre-selected pressure. Various valves V can be adjusted between their open and closed positions to facilitate the flow of fluid from the tank 3 to provide this pressure reduction while also preventing fluid from being fed toward the dispenser 7 during the tank pressure reduction operation.

For example, some configurations can include a tank pressure reduction liquid output conduit 3r that is positioned between the tank 3 and the storage unit 13 for outputting liquid within the tank to the storage unit 13. Such a conduit can feed liquid 3L output from the tank to the vaporizer 11 for vaporizing the liquid into gas and subsequently outputting the gas to the storage unit 13 via a vaporizer output conduit 13h positioned between the vaporizer 11 and the storage unit 13. A valve V of this liquid output conduit can be opened to facilitate the flow of liquid out of the tank for pressure reduction and can be closed after the pressure reduction operation is completed.

The liquid output from the tank 3 for pressure reduction can occur at the same time gas 3G within the gas is output from the tank to reduce the pressure of the tank. In other embodiments, no liquid may be removed and only gas 3G may be removed for reducing the pressure of the tank 3.

For example, another fluid output conduit of the tank 3 can include a gas output conduit 5G connected between the tank 3 and the storage unit 13 for outputting gas 3G stored within the chamber of the tank 3 to the storage unit 13. For example, the gas output conduit 5G can be positioned between the auxiliary pump 5 and the tank 3 so that gas 3G stored in the tank is outputtable from the tank 3 to the auxiliary pump 5 to reduce the pressure of the tank to the first pre-selected pressure and/or to maintain the pressure of the tank at the first pre-selected pressure. In such a configuration, the auxiliary pump 5 can be configured to pump liquid out of the tank via liquid output conduit 7b for feeding the liquid 3L to the dispenser 7 for fueling operations and also compress gas 3G via the gas output conduit 5G for pressure reduction of the tank 3. One or more valves V can be adjusted between their open and closed positions to facilitate this flow of gas 3G out of the tank 3, to the auxiliary pump 5, and out of the auxiliary pump 5 and towards the storage unit 13.

For example, after a suitable adjustment of one or more valves V, the auxiliary pump 5 can be operated to drive the flow of the gas 3G out of the tank 3 and output the gas 3G via an auxiliary pump storage unit feed conduit 6 positioned between the vaporizer 11 and the auxiliary pump 5 so that the gas 3G output from the tank 3 via the gas output conduit 5G is fed to the vaporizer 11 for undergoing further heating therein for being fed to the storage unit via the vaporizer output conduit 13h. The further heating of the gas that can occur via the vaporizer 11 can help increase the pressure of the gas via expansion of the gas that can occur from the heating for feeding the gas to the storage unit 13.

Yet another fluid output conduit of the tank 3 can include a liquid output conduit 7b connected between the tank 3 and the storage unit 13 for outputting liquid 3L stored within the chamber of the tank 3 to the auxiliary pump 5 and/or the storage unit 13. For example, the liquid output conduit 5L can be positioned between the auxiliary pump 5 and the tank 3 so that liquid 3L stored in the tank is outputtable from the tank 3 to the auxiliary pump 5 to reduce the pressure of the tank to the first pre-selected pressure and/or to maintain the pressure of the tank at the first pre-selected pressure. The auxiliary pump 5 can be operated to drive the flow of the liquid out of the tank 3 and output the liquid 3L via an auxiliary pump storage unit feed conduit 6 positioned between the vaporizer 11 and the auxiliary pump 5 so that the liquid 3L output from the tank 3 via the liquid output conduit 7b is fed to the vaporizer 11 for undergoing heating therein for forming gas from the liquid and being fed to the storage unit via the vaporizer output conduit 13h, which can be a portion of a storage unit feed conduit 13f or can be connected to such a conduit (e.g. via a connection with a compressor 13C as discussed herein). It should be appreciated that a suitable adjustment of one or more valves V can occur prior to the auxiliary pump 5 providing this flow of liquid 3L out of the tank 3.

In some implementations, the vehicle fuel tank VT to be filled may be designed so that the fuel fed to the fuel tank VT may have to be at a pressure that exceeds 1.4 MPa or other value of the second pre-selected pressure of the tank 3 for completely filling the vehicle fuel tank VT. In such implementations, the apparatus 1 can be configured to substantially fill the fuel tank VT such that at least 80% of the fuel tank is filled but less than 100% of the fuel tank is filled (e.g. 80% to 97% of the fuel tank VT is filled, 85% to 98% of the fuel tank VT is filled, between 93% and 97% of the fuel tank VT is filled, etc.).

The apparatus 1 can also (or alternatively) be configured so that once the storage tank 3 is at the pre-selected second pressure and the fuel tank VT is at a pressure that requires the storage tank 3 to be at a pressure greater than the second pre-selected pressure for further feeding of the liquid 3L and/or gas 3G to the fuel tank VT via the dispenser 7, the auxiliary pump 5 can be actuated to drive a flow of the liquid 3L out of the tank 3 via the liquid output conduit 7b connected between the auxiliary pump 5 and the tank 3 for feeding the liquid 3L and/or gas 3G to the fuel tank VT via the dispenser at a pressure that is greater than the second pre-selected pressure so that the liquid 3L and/or gas 3G can be fed into the fuel tank to fully fill the fuel tank VT. One or more valves V can be adjusted between their closed and open positions to facilitate operation of the auxiliary pump 5 for providing this flow of liquid 3L and/or gas 3G from the tank 3 to the dispenser 7.

For example, the auxiliary pump 5 can be connected to a pump dispenser feed conduit 7c that is connected between the dispenser 7 and the auxiliary pump 5. The liquid 3L output from the auxiliary pump can be output to the dispenser via the pump dispenser feed conduit 7c for being transported to the dispenser 7. The pump dispenser feed conduit 7c can be a portion of the dispenser feed conduit 7f or can be connected to the dispenser feed conduit 7f for transporting the liquid 3L from the tank 3 to the dispenser 7 via the auxiliary pump for the final stage of filling the vehicle fuel tank from its substantially filled but not entirely filled condition to an entirely filled condition in which the fuel gauge of the vehicle can indicate that the vehicle fuel tank VT is full after the fueling is completed.

In some implementations, the auxiliary pump 5 can also feed gas 3G from the tank 3 along with the liquid 3L or instead of the liquid 3L for feeding to the dispenser 7 for fueling operations. This can be provided to permit the feeding of fuel to the dispenser 7 to be throttled down, for example (e.g. gas is less dense so less mass is provided as the proportion of fluid output from the auxiliary pump 5 to the dispenser 7 that is gas can reduce the overall mass flow rate to the dispenser 7 and an increase in the proportion of the fluid output by the auxiliary pump 5 that is a liquid can increase the mass flow rate because liquid 3L is more dense than the gas 3G). This auxiliary pump 5 can adjust the proportion of gas 3G included in the fuel it feeds to the dispenser 7 from the tank 3 via valve adjustments of one or more valves V of the conduits connecting the gas and liquid spaces between the tank 3 and the auxiliary pump 5 (e.g. valve positions for valves V of the gas output conduit 5G and liquid output conduit 7b).

For some embodiments, the pre-selected second pressure for the tank 3 can be 1.4 MPa or about 1.4 MPa and the auxiliary pump 5 can be actuated to further fill the vehicle fuel tank until the pressure of the fuel within the fuel tank VT is at a pre-selected filled pressure level of the fuel tank. Such a pressure level can be greater than 1.4 MPa, can be 1.6 MPa, or can range from greater than 1.4 MPa to 1.7 MPa in some embodiments, for example.

In addition, for use in providing a final stage of filling of a vehicle fuel tank as noted above, the auxiliary pump 5 can also be considered a component of the tank pressure adjustment mechanism 12. For example, the auxiliary pump 5 can be utilized to help reduce the pressure of the tank 3 from the pre-selected second pressure to the first pressure as noted above. The auxiliary pump 5 can also be utilized to help maintain the pressure of the tank 3 at the first pre-selected pressure while the tank 3 is not in use for fueling and is storing cryogenic fluid within its chamber.

For example, the auxiliary pump 5 can be configured to periodically be activated to help drive a flow of fluid into the tank 3 via the storage unit 13 to increase pressure within the tank 3 and/or remove gas 3G and/or liquid 3L from the tank via the gas output conduit 5G and/or liquid output conduit 7b for maintaining a pressure within the tank. Such periodic actuation of the auxiliary pump 5 can also be utilized to perform a pump cooldown operation to keep the auxiliary pump 5 at a suitable temperature for its use in providing auxiliary fuel tank filling so that a fuel tank can be filled from its substantially filled state to an entirely filled state as discussed above.

Embodiments of the apparatus 1 can also be utilized to avoid loss of cryogenic fluid that may occur during the filling of a vehicle fuel tank VT. For example, a fuel tank gas conduit VG can be connected between the fuel tank VT and the storage unit 13 during fueling of a vehicle. The fuel tank gas conduit VG can include a conduit within the hose connecting the dispenser 7 to the nozzle so that gas can be output from the fuel tank VT during the filing of the fuel tank with liquid 3L can be passed through the fuel tank conduit VG to the storage unit 13 for storage therein and subsequent use in pressure adjustment of the tank 13.

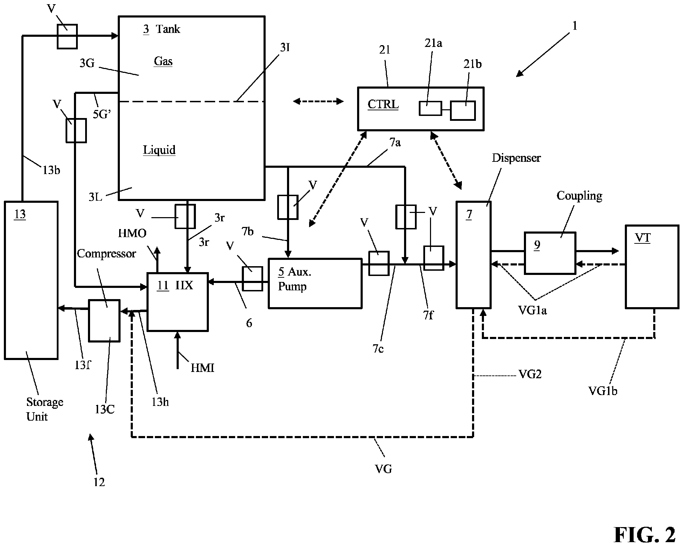

This type of vehicle gas recovery that can be obtained during fueling of a vehicle tank VT can be provided in different conduit connection pathways as shown in broken line in Figures 1 and 2. For instance, the fuel tank gas conduit VG can include a dispenser conduit connection VG1a between the vehicle fuel tank VT and the dispenser. This conduit connection can be included in the hose and nozzle of the dispenser in which the conduit for providing the liquid 3L from the tank 3 to the vehicle fuel tank VT is also included. Such conduits can be included in the same hose and integrated into the same nozzle configuration, for example. As another example, the fuel tank gas conduit VG can include a separate vehicle fuel tank conduit VG1b for connection between the dispenser 7 and the fuel tank 7 so that the gas within the fuel tank VT can be displaced by the liquid 3L fed via the dispenser 7 and output back to the dispenser 7 for being provided to the storage unit 13. The separate vehicle fuel tank conduit VG1b can include a separate hose or other conduit for connection between the dispenser 7 and the fuel tank VT for providing this flow of gas from the vehicle tank VT, example.

The fuel tank gas conduit VG can also include a segment VG2 that is connected between the dispenser 7 and the storage unit 13 so that gas output from the fuel tank VT during filling of the fuel tank with liquid 3L that is output to the dispenser 7 via the separate vehicle fuel tank conduit VG1b or dispenser conduit connection VG1a that is integrated into the same hose or other conduit used for feeding of fuel to the fuel tank VT can be output from the dispenser 7 and fed to the storage unit 13 via the fuel tank gas conduit segment VG2.

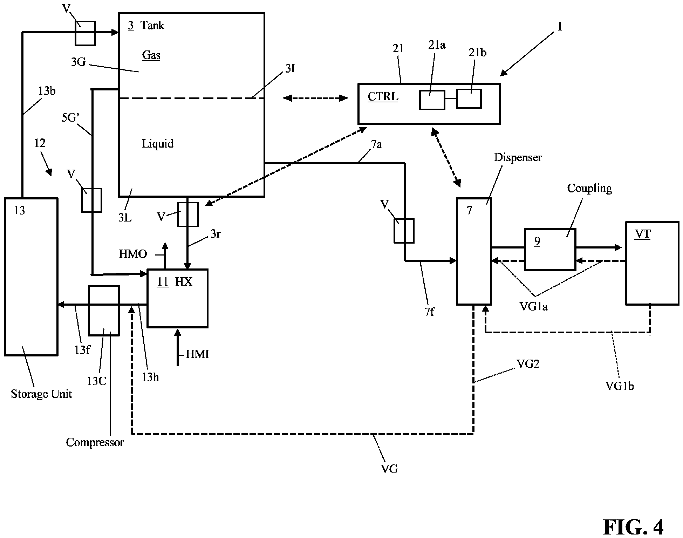

In some implementations, the gas 3G of the tank 3 can be removed from the tank 3 for being fed to one or more vessels of the storage unit 13 by a compressor 13C instead of use of the auxiliary pump 5. An example of such an embodiment is shown in Figure 4, for example. For such an implementation, gas, which can include liquid boil off or other gas formed from the liquid 3L within the tank, can be output from the tank 3 and fed to a compressor 13C via a compressor 13C tank gas feed conduit 5G' that is positioned between the tank 3 and the compressor 13C for feeding the gas 3G from within the tank 3 to the compressor 13C. The compressor 13C can compress this gas 3G and output that gas to the storage unit 13 via a compressor storage unit feed conduit 13f positioned between the compressor 13C and the storage unit 13. In embodiments that utilize the compressor 13C, the compressor 13C can be considered a component of the pressure adjustment mechanism 12.

Also, when the compressor 13C is utilized, the gas output from the vaporizer 11 and/or fuel tank VT can be fed to the compressor 13C for undergoing compression for feeding to the storage unit 13 as well. A compressor feed conduit can be positioned between the compressor 13 and the vaporizer 11 to facilitate the feed of gas output from the vaporizer 11 to the compressor 13C (e.g., this conduit can be a portion of the vaporizer output conduit 13h or can be connected to that conduit). The gas from the fuel tank VT can be fed to this conduit as well for being fed to the compressor 13C or can be fed to the compressor at a separate, second compressor feed inlet. The vaporizer outlet conduit 13h can be a portion of the compressor 13C feed conduit or can be connected to such a conduit in some embodiments.

In embodiments that utilize the compressor 13C, the auxiliary pump 5 may not be utilized for providing liquid 3L or gas 3G from the tank 3 to the storage unit 13. Instead, the compressor 13C can be utilized to provide the pressure differential for driving the flow of liquid and/or gas from the tank 3 and to the vaporizer 11 and/or compressor 13C for being fed to the storage unit 13 as discussed herein. In such configurations, the auxiliary pump 5 can be omitted or may be provided and used to facilitate a final stage of fueling for filling the vehicle fuel tank VT from its substantially filled level to an entirely filled level as discussed above.

In yet other embodiments, the compressor 13C can be provided for use in addition to the auxiliary pump 5. In such embodiments, the compressor 13C can help drive a flow of gas 3G out of the tank for pressure reduction within the tank 3 while the auxiliary pump 5 can be used to facilitate an output of liquid 3L and/or gas 3G out of the tank 3 (e.g. as discussed above).

In embodiments that utilize the auxiliary pump 5 to facilitate maintaining the tank 3 at the first pre-selected pressure and/or reduce the pressure of the tank 3 from the second pre-selected pressure to the first pre-selected pressure, the auxiliary pump 5 can include a variable flow mechanism (e.g. a variable frequency drive, etc.) to facilitate its operation at different operational states, frequencies, or speeds to get different flow rate/pressure outputs. Such a drive can be actuated via the controller 21 so that the auxiliary pump 5 can operate at a first frequency, or first pump operational rate, when reducing the pressure within the tank 3 and/or maintaining the pressure of the tank 3 to the first pre-selected pressure and can also be actuated via the controller 21 to operate at a second frequency, or second pump operational rate, for providing the supplemental filling of a fuel tank VT from its substantially filled state to its entirety filled state as discussed above. In such embodiments, the second frequency, or second pump operational rate, can be higher than the first frequency or first pump operational rate such that a pressure differential generated by the auxiliary pump 5 is greater when operating at its second frequency or second operational state. It should be appreciated that the drive motor of the auxiliary pump 5 can be communicatively connected to the controller 21 to facilitate such actuation and operational adjustments. It should also be understood that the drive of the auxiliary pump can include more than two operational states and can be variably adjusted to other speeds, frequencies, or operational states as well (e.g. can be adjusted to a third operational state and/or a fourth operational state that may be between the first and second operational states, etc.)

The storage unit 13 can include one or more storage vessels for storage of the cryogenic fluid as a compressed gas. The temperature of the gas in the storage unit can be at a pre-selected storage temperature or within a pre-selected storage temperature range. For instance, the pre-selected storage temperature can be in a temperature range of between -150°C and -230°C. The storage unit 13 can also store the compressed gas at a pre-selected storage pressure within a pre-selected storage pressure range. For instance, the pre-selected storage pressure can be a pressure in a pre-selected storage pressure range of between 5 MPa and 75 MPa or a pressure in a pre-selected storage pressure range of between 5 MPa and 35 MPa.

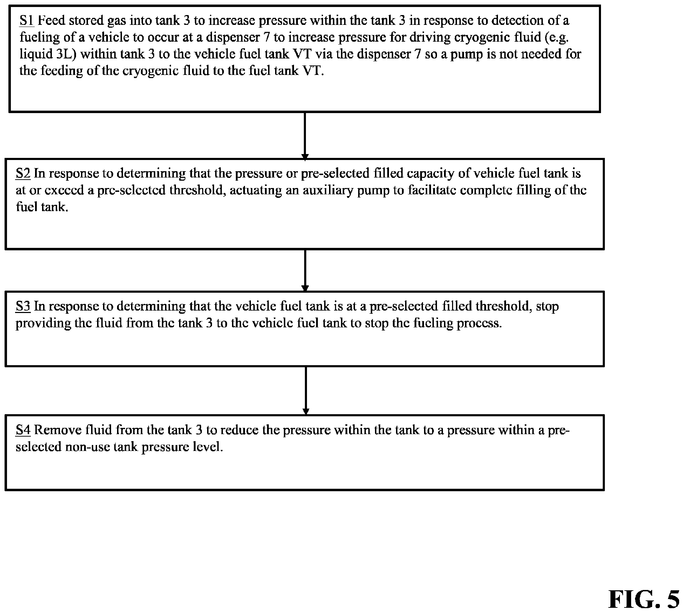

Figure 5 illustrates an exemplary embodiment of a process for cryogenic fluid dispensing that can be practiced by an embodiment of our apparatus 1. This can be appreciated from the above, for example. The controller 21 can be configured to monitor and/or facilitate performance of the process. Such processing can be defined on code stored in the memory 21b of the controller 21. The controller 21 can cause the process to be implemented when its processor 21a runs the code stored in the memory 21b for the apparatus 1 to perform an embodiment of the process, for example.

As can be seen in Figure 5, a first step S1 of the process can include feeding stored gas into the tank 3 to increase pressure within the tank 3 in response to detection of a fueling of a vehicle to occur at a dispenser 7 to increase the pressure for driving cryogenic liquid within the tank 3 to the vehicle fuel tank VT via the dispenser 7 so a pump is not needed for the feeding of the liquid 3L to the fuel tank VT. In a second step S2, the pressure or pre-selected filled capacity of vehicle fuel tank VT can be determined to be at or exceeding a pre-selected threshold and, in response to this determination, the auxiliary pump 5 can be actuated to facilitate complete filling of the fuel tank. The pre-selected threshold or pre-selected filled capacity of the vehicle fuel tank VT can be determined based on a pressure of the vehicle fuel tank VT and/or determining that the pressure within the tank 3 is at the pre-selected second pressure, for example. The actuation of the auxiliary pump 5 can be performed to facilitate the supplemental feeding of the fuel tank VT from a substantially filled state to an entirely filled state as discussed above so that a pump is only used for a relatively small portion of the fueling (e.g. providing a fueling of a final 3% to 20% or 3% to 5% of the fuel tank capacity, etc.). It should be appreciated that in some embodiments of the process, this second step S2 can be omitted (e.g., substantial filling of the fuel tank is acceptable or the fuel tank does not require a tank pressure that is over the pre-selected second pressure for complete filling of the fuel tank VT).

In a third step S3, the fluid from the tank 3 can stop being provided to the vehicle fuel tank VT in response to determining that the vehicle fuel tank is at a pre-selected filled threshold (e.g., is full or that a user desires to cease fueling operation at the dispenser, etc.). After the fueling process is stopped, a fourth step S4 can include removing fluid from the tank 3 to a non-use tank pressure level (e.g., reducing the pressure within the tank from the second pre-selected pressure to the first pre-selected pressure as discussed above). Such a pressure reduction can be via use of the auxiliary pump 5 or compressor 13C to remove gas 3G from the tank 3 and/or outputting of liquid from the tank 3. The removed fluid can be fed to a vaporizer 11 and subsequently fed to the storage unit for storage therein for subsequent use. Examples of such flows of fluid from the tank for reducing the pressure of the tank 3 and feeding that fluid to the storage unit 13 can be appreciated from the above.

It should be appreciated that embodiments of the pressure adjustment mechanism 12 can be configured to implement an exemplary embodiment of the process shown in Figure 5 or other embodiment of the process. For example, embodiments of the process can include other steps. Those steps can include, for example, retrofitting the pressure adjustment mechanism 12 into a pre-existing system and updating a controller 21 and/or providing a controller 21 to monitor and/or control operation of the process. Embodiments of the process can also include extracting gas from the vehicle fuel tank during fueling and passing that gas to the storage unit (e.g., via fuel tank gas conduit VG as discussed above) or venting that gas from the vehicle fuel tank.

Embodiments of our apparatus and process can provide significant advantages. For example, embodiments can avoid use of a pump for vehicle fueling operations or can be configured so that only intermittent use of an auxiliary pump 5 is needed for a small portion of the fueling (e.g., for a final fueling stage of fueling). The avoidance of pump usage and/or minimal pump usage can reduce the need for maintenance as pump usage can be avoided or greatly reduced. Because the pump can be avoided or may only be utilized for a small portion of the fueling of a vehicle fuel tank, there can also be substantially less power consumption and a significant avoidance of fugitive emissions can be provided. Also, pump and conduit cooldown time and pressure equalization delay times for fueling can be avoided or greatly minimized. Additionally, embodiments can permit boil off loss capture during fueling as well as during storage of the fluid within the tank 3 to greatly reduce loss of cryogenic fluid. These improvements can provide significant operational cost reductions as well as avoiding cryogenic fluid losses and power reduction. These types of improvements can also facilitate a more economical and environmentally friendly operation for cryogenic fluid vehicle fueling systems.

Additional benefits that can be provided can include sizing of any type of pump that may be used in the apparatus 1. The auxiliary pump 5 can be smaller so that the capital and operational costs associated with any use of the pump (for embodiments that may utilize the auxiliary pump) can be significantly reduced.

Some of the exemplary embodiments discussed herein relate to utilization of hydrogen. Hydrogen suitable for fueling is relatively pure in accordance with pre-defined hydrogen fueling standards. The impurity content within such hydrogen is very low in accordance with applicable hydrogen fuel standards. Hydrogen that can be stored for use in fueling of a vehicle is an example of a cryogenic fluid. Other embodiments of the apparatus can be utilized with other types of cryogenic fluid (e.g., cryogenic liquid and/or cryogenic gas) instead of hydrogen gas and/or liquid hydrogen. For example, the tank 3 can retain another type of cryogenic fluid (e.g. cryogenic natural gas, or liquid methane, etc.). It should therefore be understood that the hydrogen fueling exemplary embodiments discussed herein are examples and that other embodiments and uses are also contemplated in addition to use in hydrogen fueling station type environments. In such non-hydrogen fueling embodiments, the pre-selected temperature and pressure for the tank 3 may differ to account for the different cryogenic fluid (e.g., the temperature can be less than a boiling point for the fluid so the fluid is maintainable as a liquid) as also noted above.

It should also be appreciated that other modifications to the embodiments explicitly shown and discussed herein can be made to meet a particular set of design objectives or a particular set of design criteria. For instance, the arrangement of valves, piping, and other conduit elements (e.g. conduit connection mechanisms, tubing, seals, etc.) for interconnecting different units of the apparatus for fluid communication of the flows of fluid between different units can be arranged to meet a particular layout design that accounts for available area of the cryogenic fluid dispensing, sized equipment of the system, and other design considerations. As another example, the flow rate, pressure, and temperature of the fluid passed through the different elements of the apparatus as well as passed through other apparatus elements can vary to account for different cryogenic fluid storage and use system design configurations and other design criteria. As yet another example, the material composition for the different structural components of the apparatus can be any type of suitable materials as may be needed to meet a particular set of design criteria.

As another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of our apparatuses for cryogenic fluid dispensing, processes for cryogenic fluid dispensing, and methods of making and using the same have been shown and described above, it is to be distinctly understood that the invention is not limited thereto but may be otherwise variously embodied and practiced within the scope of the following claims.

## Claims

1. An apparatus for cryogenic fluid dispensing, comprising:
a pressure adjustment mechanism (12) connectable to a tank (3) configured to store a cryogenic liquid (3L) within the tank, the tank (3) to which the pressure adjustment mechanism (12) is connectable being positioned to feed the cryogenic liquid to at least one dispenser (7);
the pressure adjustment mechanism (12) configured to increase a pressure of the tank (3) from a first pre-selected pressure to a second pre-selected pressure in response to a detection that the cryogenic liquid (3L) from the tank (3) is to be fed to the at least one dispenser (7) for filling a vehicle fuel tank (VT) so that the cryogenic fluid is outputtable from the tank (3) to the vehicle fuel tank (VT) via the dispenser (7); and
the pressure adjustment mechanism (12) configured to decrease the pressure of the tank (3) from the second pre-selected pressure to the first pre-selected pressure in response to a detection that filling of the vehicle fuel tank (VT) is stopped or completed;
wherein the pressure adjustment mechanism (12) is configured such that the decrease of the pressure of the tank (3) from the second pre-selected pressure to the first pre-selected pressure includes removing at least one cryogenic fluid from the tank (3) to store the removed at least one cryogenic fluid as a compressed gas within a storage unit (13) connectable to the tank (3), the removed at least one cryogenic fluid including the cryogenic liquid (3L) removed from the tank (3) and/or a cryogenic gas (3G) removed from the tank (3); and
wherein the pressure adjustment mechanism (12) is configured such that the increase in pressure of the tank (3) from the first pre-selected pressure to the second pre-selected pressure includes feeding the compressed gas stored in the storage unit (13) to the tank (3).

2. The apparatus of claim 1, wherein the cryogenic fluid is comprised of hydrogen, the cryogenic liquid is comprised of liquid hydrogen and the cryogenic gas is comprised of hydrogen gas.

3. The apparatus of any one of the preceding claims, wherein the pressure adjustment mechanism (12) includes an auxiliary pump (5) connected between the tank (3) and the storage unit (13) and/or a compressor (13C) connected between the storage unit (13) and the tank (3).

4. The apparatus of claim 3, wherein the pressure adjustment mechanism (12) also comprises a vaporizer (11) positioned between the tank (3) and the compressor (13C).

5. The apparatus of claim 3 or claim 4, wherein the pressure adjustment mechanism (12) also comprises a vaporizer (11) positioned between the auxiliary pump (5) and the storage unit (13).

6. The apparatus of any one of the preceding claims, comprising:
an auxiliary pump (5) positioned between the tank (3) and the dispenser (7), the auxiliary pump (5) configured to drive a flow of the cryogenic liquid from the tank (3) to the dispenser (7) after the tank (7) is at the second pre-selected pressure for filling the vehicle fuel tank (VT) from a substantially filled condition to an entirely filled condition.

7. The apparatus of any one of the preceding claims, wherein the pressure adjustment mechanism (12) includes:
a vaporizer (11) positioned to receive the cryogenic gas and/or the cryogenic liquid from the tank (3) during the decrease of the pressure of the tank (3) from the second pre-selected pressure to the first pre-selected pressure and output a heated gas; and
a compressor (13C) positioned to receive the heated gas to compress the heated gas to form the compressed gas and feed the compressed gas to the storage unit (13).

8. The apparatus of any one of the preceding claims, wherein the pressure adjustment mechanism includes:
a vaporizer (11) positioned to receive the cryogenic gas and/or the cryogenic liquid from the tank (3) during the decrease of the pressure of the tank (3) from the second pre-selected pressure to the first pre-selected pressure and output a heated gas; and
an auxiliary pump (5) positioned to drive a flow of the cryogenic gas and/or a flow of the cryogenic liquid from the tank (3) to the storage unit (13) during the decrease of the pressure of the tank (3) from the second pre-selected pressure to the first pre-selected pressure such that the cryogenic gas and/or the cryogenic liquid pass through the vaporizer (11) to be output as the heated gas.

9. The apparatus of any one of the preceding claims, comprising:
the tank (3) and the dispenser (7), the dispenser (7) preferably being connectable to the vehicle fuel tank (VT) such that gas from the vehicle fuel tank is passable from the vehicle fuel tank (VT) to the storage unit (13) during the filling of the vehicle fuel tank with the cryogenic liquid.

10. The apparatus of any one of the preceding claims, comprising:
a controller (21) having a processor (21a) connected to a non-transitory computer readable medium (21b), the controller (21) communicatively connectable to the pressure adjustment mechanism (12).

11. A process for cryogenic fluid dispensing, comprising:
in response to detection of a fueling of a vehicle to occur at a dispenser (7), feeding compressed gas stored in a storage unit (13) to a tank (3) to increase pressure of the tank (3) above a first pre-selected pressure for driving cryogenic liquid (3L) within the tank from the tank (3) to the dispenser (7) for passing the cryogenic liquid to a vehicle fuel tank (VT) of the vehicle;
in response to determining that the vehicle fuel tank (VT) is at a pre-selected filled threshold, stop providing the fluid from the tank (3) to the vehicle fuel tank (VT); and
removing fluid from the tank (3) to reduce the pressure to the first pre-selected pressure.

12. The process of claim 11, comprising:
in response to determining that the pressure of the tank (3) is at a pre-selected second pressure and that the vehicle fuel tank (VT) is not at the pre-selected filled threshold, actuating an auxiliary pump (5) to facilitate driving the cryogenic liquid (3L) from the tank (3) to the vehicle fuel tank (VT) to fill the vehicle fuel tank from a substantially filled condition to an entirely filled condition.

13. The process of claim 12 and/or the apparatus of claim 6, wherein the substantially filled condition of the vehicle fuel tank (VT) is less than 100% filled and at least 90% filled.

14. The process of claim 12 or claim 13, comprising:
determining that the pressure of the tank (3) is at the pre-selected second pressure and that the vehicle fuel tank (VT) is not at the pre-selected filled threshold via a controller (21) communicatively connected with the dispenser (7) and at least one pressure sensor positioned to monitor pressure within the tank (3).

15. The process of any one of the claims 11 to 14, wherein the cryogenic liquid is liquid hydrogen.

16. The process of any one of the claims 11 to 15, comprising:
receiving gas from the vehicle fuel tank (VT) during fueling of the vehicle fuel tank and feeding the received gas to the storage unit (13).

17. The process of any one of the claims 11 to 16, wherein the removing of the fluid from the tank (3) to reduce the pressure to the first pre-selected pressure comprises at least one of:
removing cryogenic gas (3G) from the tank (3) and feeding the removed cryogenic gas to the storage unit (13); and
removing cryogenic liquid (3L) from the tank (3), heating the removed cryogenic liquid via a vaporizer (11) to form a gas for feeding the gas to the storage unit (13).

18. The process of any one of the claims 11 to 17, wherein the removing of the fluid (3G, 3L) from the tank (3) to reduce the pressure of the tank to the first pre-selected pressure comprises:
actuating a compressor (13C) connected between the tank (3) and the storage unit (13) to drive a flow of gas out of the tank (3) for being fed to the storage unit (13).
